# EUROPEAN PATENT SPECIFICATION

(11) **EP 3 767 973 B1**
(45) Date of publication and mention of the grant of the patent: **16.02.2022**
(21) Application number: 19187050.0
(22) Date of filing: 18.07.2019
(51) Int. Cl.: H04W 4/20, H04W 4/80, H04W 4/90

(54) **METHOD FOR BROADCASTING DATA**
VERFAHREN ZUR ÜBERTRAGUNG VON DATEN
PROCÉDÉ DE DIFFUSION DE DONNÉES

(43) Date of publication of application: 20.01.2021
(60) Divisional application: 20184920.5
(73) Proprietor: neXenio GmbH, 10117 Berlin (DE)
(72) Inventor: Schultz, Stephan, 14471 Berlin (DE); Mirtschin, Marvin, 14473 Potsdam (DE); Berger, Philipp, 10627 Berlin (DE); Hennig, Patrick, 10437 Berlin (DE); Meusel, Rene, 12307 Berlin (DE); Fiedler, Patrik, 33332 Gütersloh (DE)
(74) Representative: Richardt Patentanwälte PartG mbB

(56) References cited:
- US-A1- 2014 157 365
- US-A1- 2016 191 181
- US-A1- 2019 182 236
- MCHERGUI ABIR ET AL: "A survey and comparative study of QoS aware broadcasting techniques in VANET", TELECOMMUNICATION SYSTEMS, BALTZER SCIENCE PUBLISHERS, BASEL, CH, vol. 66, no. 2, 14 February 2017 (2017-02-14), pages 253-281, XP036308350, ISSN: 1018-4864, DOI: 10.1007/S11235-017-0280-9 [retrieved on 2017-02-14]

## Description

### TECHNICAL FIELD

The disclosure relates to wireless systems, and particularly to a method for transmitting a data item.

### BACKGROUND

The use of mobile communication devices has been dramatically increasing in recent years. In particular, mobile devices have become ruggedized for use in many fields. Uses include digitizing notes, sending and receiving invoices, asset management, recording signatures, managing parts, and scanning barcodes. However, as the use of the mobile devices increases, there is a continuous need to develop more convenient additional functions in order to satisfy technical needs of the different uses.

US 2016/0191181 A1 discloses a method for audio broadcast retransmissions by a broadcast device.

### SUMMARY

It is an objective of embodiments of the invention to provide for a method for transmitting at least one data item, library and a communication device. Said objective is solved by the subject matter of the independent claims. Advantageous embodiments are described in the dependent claims.

The data item is a user's data item. For example, a user application (e.g. a user mobile application) has produced or provided the data item to the communication device. The communication method comprises receiving a request for transmitting the data item in a connection oriented channel and performing the packetizing and the broadcasting in response to receiving that request. The request may be received from an application of the communication device itself or from a remote application. The request received from the remote application may be received in a connection oriented channel. This may enable a seamless integration of the present method with existing applications e.g. using Bluetooth.

The broadcasting may enable access to the data item by all devices that are in an area of the broadcast that is defined by the transmission range of the communication device. The present method may not require a pre-knowledge of the receivers of the data item in order to broadcast the data item. The broadcasting in accordance with the present subject matter may be advantageous compared to other services as the broadcasts are meant for unknown or temporary recipients. One example is mobile devices of visitors of a location. In this case, the mobile devices do not need to be known beforehand by the communication device in order to be able to access the data item, as they just need to be within the range of communication of the communication device. Thus, the present subject matter may enable to serve a high number of devices and may not be limited to a small fixed number of devices to which the data can be communicated.

For example, the communication device may be a mobile Bluetooth enabled device. This may be advantageous because, by contrast to known mobile devices, the communication device of the present subject matter may be configured to communicate via Bluetooth with multiple devices at the same time. For example, a conventional Bluetooth enabled device can work only with a few devices at the same time, since Bluetooth allows up to seven connections to one Bluetooth radio at the same time. The fact that it only supports seven connections is a limitation that may be overcome by the present subject matter. The present communication device may solve this problem since there may be no requirement on setting up a connection to the communication device. This may further have the advantage of saving the time required for setting up connections (e.g. handshakes).

In one example, the data item is received from the communication device by each device of a number N of devices, wherein N > 7.

The present method may further not be limited in the size of data to be transmitted. For example, the at least one data item may have a size that is higher than a predefined minimum size e.g.100 kb.

Examples of a communication device include, but are not limited to, cellular telephone, smartphone, smartwatch, personal digital assistant (PDA), handheld device, wireless modem, laptop computer, personal computer, machine type communication (MTC) device, machine-to-machine (M2M) device, and sensor device (including, for example, so-called "smart-meters," alarms, and health monitoring devices).

According to the invention, the method comprises repeatedly: determining an urgency level of transmission of the at least one data item that are currently stored at the communication device; assigning to each data packet of the data packets a timestamp being indicative of a time delay for broadcasting the respective data packet; and executing a priority scheduling using the determined urgency level and the current time delays, thereby calculating priorities of the data packets, wherein the broadcasting of at least part of the data packets is performed in accordance with the priorities. This may enable that in each iteration/repetition: before performing the broadcasting, the priority scheduling is re-executed for the currently stored packets and the broadcasting is performed in accordance with new results of the re-execution of the priority scheduling. This embodiment may enable a controlled and efficient communication of data by the communication device.

According to one embodiment, the transmission is performed using at least one advertiser of the communication device, wherein the advertiser is configured to transmit a scheduled data packet in accordance with an advertisement time frame, wherein the repetition is performed with a repetition frequency proportional to the advertisement time frame.

The repetition of the determination of the urgency level, the assigning of the timestamp and the executing of the priority scheduling is performed based on the advertisement time frame (ATF) of the advertiser. For example, the repetition may be performed every ATF e.g. after initiating an iteration the next iteration would start after a time period of ATF.

The at least one advertiser may comprise predefined advertisers. Each advertiser may be associated with its values of broadcasting parameters of the communication device. The advertiser may control the communication device to broadcast the data packets in accordance with its broadcasting parameters. For example, the advertiser may control the communication device to advertise or broadcast on one given channel every 100ms or 200ms.

According to the invention, the method comprises: determining advertisers of the communication device, wherein each advertiser of the advertisers is configured to transmit a data packet in accordance with an assigned advertisement time frame; for each data item of the at least one data item, selecting an advertiser of the advertisers using the urgency level of the data item and the advertisement time frames; for each advertiser of the selected advertisers, separately performing the execution of the priority scheme using the urgency level and the current time delays of data packets for which said advertiser is selected; wherein said advertiser is configured to perform the broadcasting of said data packets. This embodiment may optimize data transmission based on user needs e.g. the fastest transmission is to be selected for the highest urgency level.

According to one embodiment, the method further comprises receiving the data items from a real time data source and/or from a static data source, wherein the ur gency level of a data item received from the real time data source is higher than the urgency level of a data item received from the static data source.

For example, two urgency levels may be defined. The communication method comprises: upon receiving the data item, automatically determining whether the source of the data item is a real-time application or not, and if it is a real-time application assigning the highest urgency level of the two urgency levels to the data item; otherwise assigning the lowest urgency level of the two urgency levels to the data item. This may enable an automatic and efficient transmission of data. For example, if the user of the real-time application does not see any transmission of data he or she may try again to resubmit the data item. This may be prevented by the present embodiment.

According to one embodiment, the real time data source comprises one of a: location determining system, real time flight data source, and news data source; the static data source providing a user identity. This embodiment may be advantageous as the transmission priorities may enable access to the right information at the right time. For example, the access to user identities is less urgent than the access to flight information.

According to one embodiment, each data packet of the data packets comprises a sequence number indicative of a transmission order of the data packet within the sequence and an index indicative of the data item, the method further comprising repeating the broadcasting of the sequence of data packets at least once. The index may enable to distinguish between packets of different data items. The transmission order may enable to combine or assemble the data packets that form a given data item. Repeating the submission of the data item may enable a receiver to receive the data item multiple times and thus may enable the receiver to perform a time dependent processing of the same data item e.g. if the data item is used for authentication, the authentication process may be repeated for each further received data item.

According to one embodiment, the broadcasting comprises: for each data packet of the data item, randomly hopping from a previously used frequency to another frequency of the short-range radio frequency band for the broadcasting of the data packet; or for each iteration of the broadcasting of the sequence of data packets, randomly hopping from a previously used frequency to another frequency of the short-range radio frequency band for the iterated broadcasting of the data packets. In another aspect, the invention relates to a library comprising a pre-written routine for enabling the execution of the method of any of the preceding embodiments. The library further comprises a computer-readable program code, the computer-readable program code being configured for performing at least part of the method of any of the preceding claims using the routine.

In another aspect, the invention relates to a communication device according to claim 8.

### BRIEF DESCRIPTION OF THE DRAWINGS

FIG. 1 depicts a diagram of a communication device in accordance with an example of the present subject matter.
FIG. 2A is a flowchart of a method for transmitting at least one data item in accordance with an example of the present subject matter.
FIG. 2B is a diagram illustrating a method for packetizing a data item in accordance with an example of the present subject matter.
FIG. 3 is a flowchart of a method for broadcasting data packets of multiple data items in accordance with an example of the present subject matter.
FIG. 4 is a flowchart of a method for broadcasting data packets of multiple data items in accordance with an example of the present subject matter.
FIG. 5 is a flowchart of a method for broadcasting data packets in accordance with an example of the present subject matter.
FIG. 6A is a flowchart of a method for transmitting a data item in accordance with an example of the present subject matter.
FIG. 6B is a diagram illustrating a method for splitting a session key in accordance with an example of the present subject matter.
FIG. 7A is a flowchart of a method for accessing the transmitted data items by a receiver in accordance with an example of the present subject matter.
FIG. 7B is a flowchart of a method for accessing the transmitted data items by a receiver in accordance with an example of the present subject matter.
FIG. 7C is a flowchart of a method for accessing the transmitted data items by a receiver in accordance with an example of the present subject matter.

Like reference symbols in the various drawings indicate like elements.

### DETAILED DESCRIPTION

The descriptions of the various embodiments of the present invention will be presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

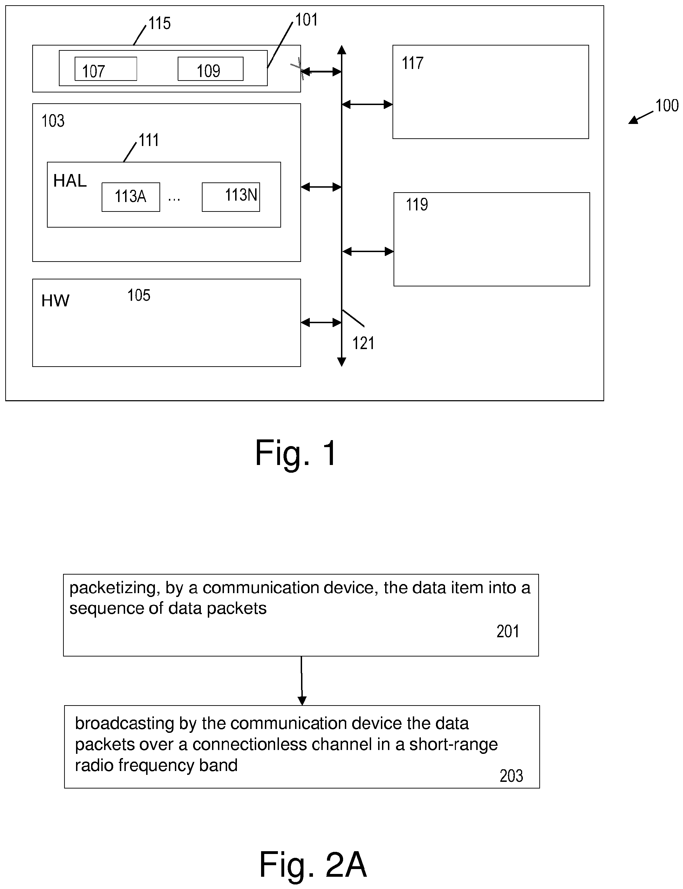

**Figure 1** depicts a diagram of a communication device in accordance with an example of the present subject matter. The communication device 100 may be a mobile Bluetooth enabled communication device but it is not limited to.

Components (or layers) of the communication device 100 comprise an application component 101, a firmware component 103 and a hardware component 105.

The application component 101 comprises, for example, a first application 107 and a second application 109. The first application may for example be a system app e.g. of an Android software stack or iOS software stack, that provides capabilities of the present method and that developers can access from their own app. For example, the second application 109 may be a mobile app that is configured to invoke the system app 107 for transmitting data items.

The firmware component 103 may implement the interface between the application component 101 and the hardware component 105. The firmware component 103 may comprise application programing interfaces APIs that are needed to implement various services such as services that are enabled by the hardware component 105. The firmware component may for example comprise a hardware abstraction layer (HAL) 111. The hardware abstraction layer 111 may enable configuration of multiple advertisers 113A-N. For example, each advertiser may be assigned a respective advertisement time frame, such that the advertiser may control the hardware component 105 to broadcast data in accordance with the assigned advertisement time frame. In another example, each advertiser may be assigned a given channel e.g. one of the advertising channels: channel 37 (2402 MHz), channel 38 (2426 MHz), and channel 39 (2480 MHz), such that the advertiser may control the hardware component 105 to broadcast data using the channel that is assigned to the advertiser. This may enable a modular and flexible implementation of the broadcasting by the present subject matter. The advertisers enable the communication device to transmit data without connecting to a receiver.

The hardware component 105 may for example be a Bluetooth chipset. The hardware component 105 may comprise an analog communications circuitry used, for example, for modulating and demodulating analog signals and transforming them into digital symbols. The communication using the hardware component 105 may be performed over multiple channels in a short-range radio frequency band e.g. from 2.4000 GHz to 2.4835 GHz. A frequency hopping spread spectrum technique, in which the radio of the hardware component 105 hops between channels on each connection event, may be used. This technique minimizes the effect of a radio interference.

The application component 101 may for example be stored in a memory 115. The memory 115 may include a computer system readable media in the form of volatile memory, such as random access memory (RAM) and/or cache memory. The firmware component may be stored in a memory such as a ROM of the communication device 100. The communication device 100 may further comprise one or more processors or processing units 117, a storage system 119 and a bus 121 that couples the various components to processor 117. The storage system 121 may include for example a hard disk drive (HDD).

The operation of the communication device 100 is described with reference to the following figures.

**Figure 2A** is a flowchart of a method for transmitting at least one data item in accordance with an example of the present subject matter. The data item may for example be received at a communication device such as the communication device 100 from a user. The term "user" refers to a computer such as the communication device or an application executing on the computer that issues requests to transmit data items.

For example, the first application 107 comprises instructions, wherein execution of the instructions by a processor of the communication device 100 causes the communication device to receive the data item. In another example, the execution of the instructions of the first application by the processor causes the communication device to access (or read) the data item in a storage system of the communication device to access the data item in a storage system of another computer system to which the communication device can be connected. The execution of the instructions of the first application by the processor further causes the communication device to execute at the method of Figure 2A.

The first application 107 may for example comprise a client side or front-end application that enables interactions with one or more second applications. The second application may for example be part of the communication device. For example, the data item may be received by the first application from the second application via the client side. The first application may for example be a system app e.g. of an Android software stack or iOS software stack, that provides capabilities of the present method and that developers can access from their own app. For example, the second application may be a mobile app that is configured to invoke the system app enabling the present subject matter for transmitting the data item.

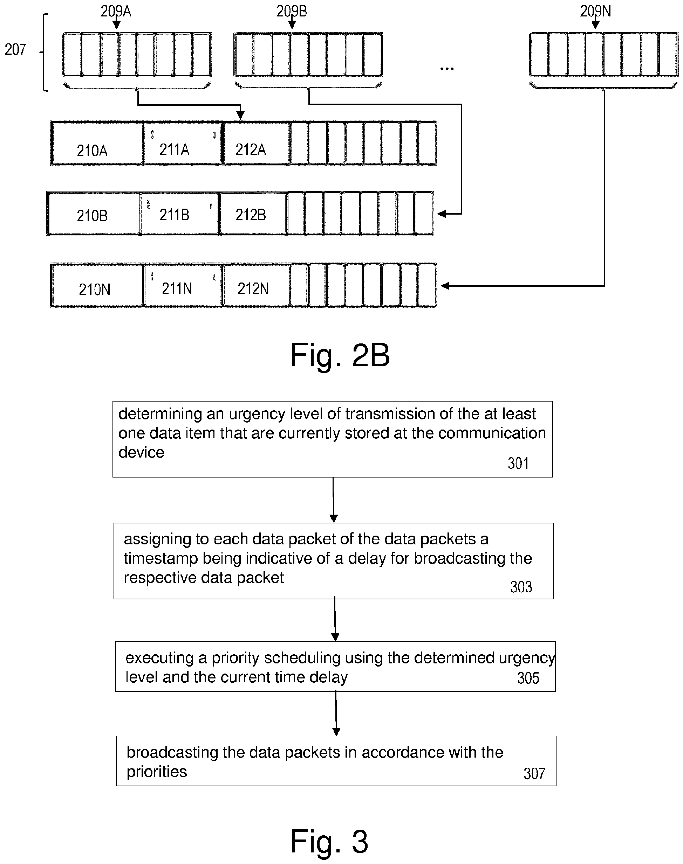

In step 201, the communication device 100 may packetize the data item into a sequence of data packets. As illustrated in Figure 2B, the data item 207 is packetized into data packets 209A-N. Each of the data packets may be a group of data bits as illustrated by cells of the data packets. In one example, header information may be added to each of the data packets 209A-N. As indicated in Figure 2B, the header information may for example comprise for each of the data packets 209A-N a respective order number 210A-N. The order number 210A-N provides a single identifier uniquely identifying the data packet in the respective data item 207. The header information may further comprise for each of the data packets 209A-N an index 211A-N identifying the data item 207 to which the data block belongs. This may result in the data packets 209A-N having the same index 211A-N as they belong to the same data item 207. The header information may further comprise for each of the data packets 209A-N a count value 212A-N. The count value 212A-N is indicative of a transmission time or transmission order of the respective data packet 209AN by the communication device 100. For example, the count value 212A-N may be initialized such that it can be changed in each data packet before transmission of the data packet. After the header information is added, the resulting data packets 209A-N as shown in Figure 2B have a predefined data packet structure that is known to a receiver of the data packets. The receiver may read the content of the data packets 209A-N and combine/assemble the data packets in accordance with the data structure.

In step 203, the communication device may broadcast the data packets over a connectionless channel in a short-range radio frequency band. For example, the first application may comprise instructions that when executed invoke a broadcasting feature of the communication device. With the broadcasting feature the communication device becomes an advertiser that is non connectable as it transmits the data in the connectionless channel. The communication device may be a short-range device (SRD). The communication device may operate in accordance with one or more predefined frequency bands that are classified as short-range radio frequency bands. For example, the short-range radio frequency band may be 2400.0-2483.5 MHz.

In one example, steps 201-203 may be used to transmit a session key to a receiver in accordance with a key-exchange protocol. The data item may be the session key, and the broadcasting of the data item (session key) may be a step of the key-exchange protocol.

**Figure 3** is a flowchart of a method for broadcasting data packets (e.g. further detailing step 203) of multiple data items in accordance with an example of the present subject matter.

The multiple data items may be received at the communication device 100 from multiple applications such as the second application 109. The received data items may be stored in a storage system of the communication device 100. Each data item of the multiple data items may be associated with an urgency level in step 301. The urgency level may for example be an integer e.g. ranging from 1 to 10.

In one example, the first application may provide a list of possible urgency levels that the second applications 109 have to choose for their data item transmission. For example, the receiving of the data item further comprises receiving an urgency level associated with said data item. This may enable a systematic and controlled processing of data items. This may for example prevent receiving the same data item multiple times e.g. the user who wants his or her data item to be urgently sent can select the highest level of urgency and then he or she can be confident that that data item would be processed accordingly. This is in contrast to the case where there is no enabled selection of urgency levels, as the user may not know whether his or her data item is being processed and may then retry to submit it again.

In another example, the urgency level may be determined e.g. by the first application, based on the sender of the data items. If for example, the second application is a real-time application such as a navigation application or a real time flight booking application, the data item received from the second application may be assigned a highest level of urgency. If however, the second application is a static application such as a calculator application or a dictionary application, the data item received from the second application may be assigned a lower level of urgency.

The multiple data items may be packetized in accordance with the present subject matter e.g. as described with reference to Figure 2. This may result in a number of data packets that are to be transmitted by the communication device, wherein each data packet is associated with an urgency level of the respective data item. However, other features may be needed to complement the urgency level to enable an optimal transmission of data. For that, in step 303, each data packet of the data packets of the multiple data items may be assigned a timestamp indicating a delay for broadcasting said data packet. The timestamp may for example be assigned to the data packet only once, at the time it is processed for its first transmission (e.g. a data packet may be retransmitted multiple times). By comparing the timestamp with the current time (e.g. of the current iteration) the delay for broadcasting may be deduced.

In step 305, a priority scheduling may be executed using the determined urgency levels and the current time delays (of the data packets of the current iteration). This may result or may enable to calculate priorities of the data packets. For example, a model or function may be used to combine the urgency level with the delay to determine a priority for the transmission e.g. a data packet associated with the highest urgency level and having the longest delay may be assigned the highest priority etc.

In step 307, the data packets of the multiple data items may be broadcasted in accordance with the priorities over a connectionless channel in a short-range radio frequency band e.g. the packet may be broadcasted following a descending order of the priorities e.g. the data packet with the highest priority may be broadcasted first etc.

Steps 301-307 may, for example, be repeated on a periodic basis, e.g., every minute or every 10 minutes. In another example, if the communication device is a Bluetooth-enabled device, the repetition may be performed every advertising interval. In each iteration, different sets of data packets may be stored; e.g., in a first iteration, a set of packets p1, p2, and p5 may be stored, while in the next iteration, another set of packets p5, p10, p4, and p11 may be stored, etc. The sets of packets of different iterations may comprise or share the same packets, e.g., p5. In each iteration, if a data packet (e.g., p5) is already assigned a time stamp, that time stamp may be maintained (or reassigned again to p5). The priority scheduling may be determined for the current packets of the current iteration.

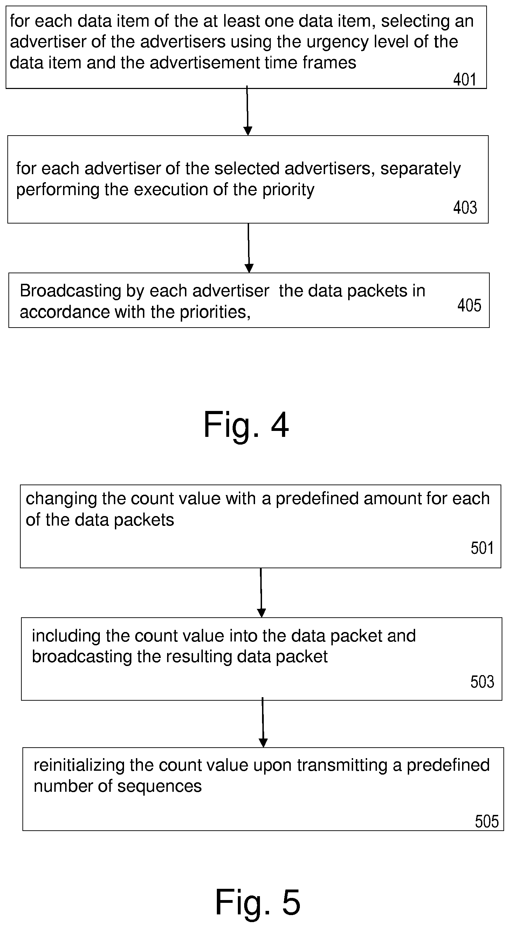

**Figure 4** is a flowchart of a method for broadcasting data packets of multiple data items in accordance with an example of the present subject matter.

In step 401, for each data item of the multiple data items, an advertiser of the advertisers 113A-N of the hardware abstraction layer 111 may be selected using the urgency level of the data item and the advertisement time frames. For example, the higher the urgency level, the smaller the selected advertisement time frame. This may further improve and optimize the data transmission. This may for example, result in an advertiser being selected for one or more data items.

For each advertiser of the selected advertisers, a separate execution of step 305 (in step 403) may be performed. That is, the priority scheme may be performed using the urgency level and the current time delays of data packets for which said advertiser is selected.

Each of the selected advertisers may broadcast in step 405 the associated data packets in accordance with their calculated priorities.

**Figure 5** is a flowchart of a method for broadcasting data packets (e.g. further detailing step 203) in accordance with an example of the present subject matter.

In step 501, the count value 212A-N may be changed with a predefined amount, for each of the data packets. For example, the count value may be incremented by one.

The changed count value may be included in step 503 in the data packet 209A-N and the resulting data packet is broadcast.

In step 505, the count value may be re-initialized upon transmitting a predefined number of sequences. This may be advantageous as the receiver of data packets may check using the count value the time gap between the received consecutive data packets of the same data item and based on the time gap it may detect if there is a possible replay attack. For example, if the time gap is longer than a predefined threshold this may indicate a suspected replay attack.

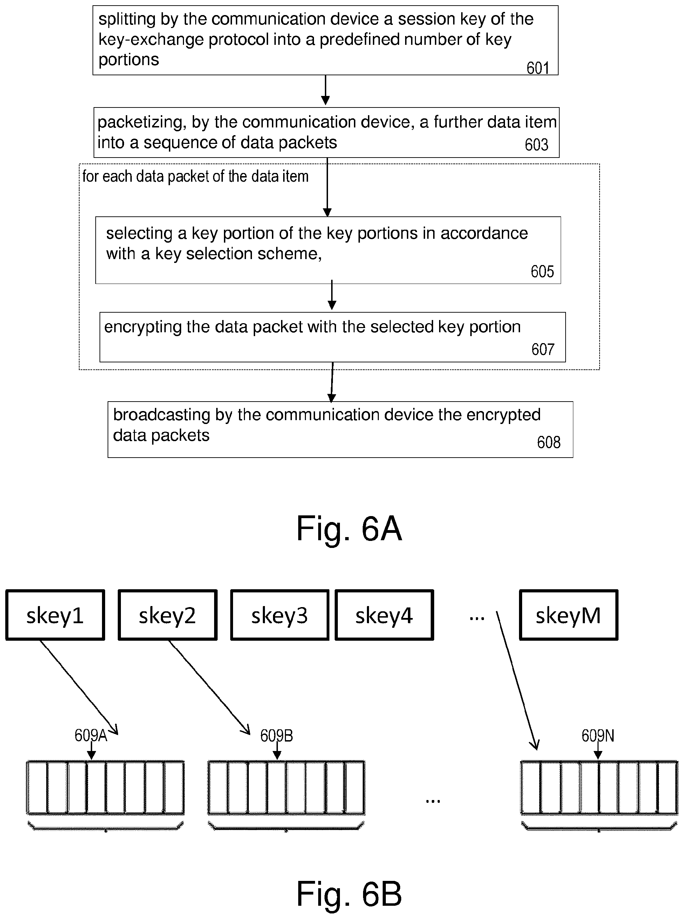

**Figure 6A** is a flowchart of a method for transmitting a data item in accordance with an example of the present subject matter. For example, a session key is already exchanged or transmitted by the communication device to a receiver e.g. in accordance with the key exchange protocol.

The communication device may split or divide in step 601 the session key into a predefined number of key portions. This is illustrated in Figure 6B, where the session key *skey* is split into M key portions *skey1, skey2 to skeyM.*

The communication device may packetize in step 603 the data item into a sequence of data packets 609.A to 609.N e.g. as described with the present subject matter.

For each data packet 609.A to 609.N of the data item, a key portion of the key portions *skey1, skey2 to skeyM* may be selected in step 605 in accordance with a key selection scheme. For example, the selection scheme may require that the key portions are used following the ascending order of the numbers 1 to M (as illustrated in Figure 6B). That is, the key portion *skey1* would first be selected followed by *skey2,* followed by *skey3* and so on. In another example, any predefined order (e.g. user defined order) of key portion selection can be used. For example, the selection scheme may indicate that key portion *skey3* is first selected followed by *skey7,* then followed by *skey2* and so on. This may render the selection scheme not predictable and thus the transmission of data may further be secured. In another example, the selection scheme may require using the same portion key portion for encrypting packets of the same data item, but different key portions for different data items. The receiver may be configured to perform step 603 to split on its side the session key. The receiver may also have access to the selection scheme such that it can be used for decrypting the data packets.

In step 607, the data packet 609.A-N may be encrypted with the selected key portion.

In step 609, the communication device may broadcast the encrypted data packets 609.1-N of the data item over a connectionless channel in a short-range radio frequency band.

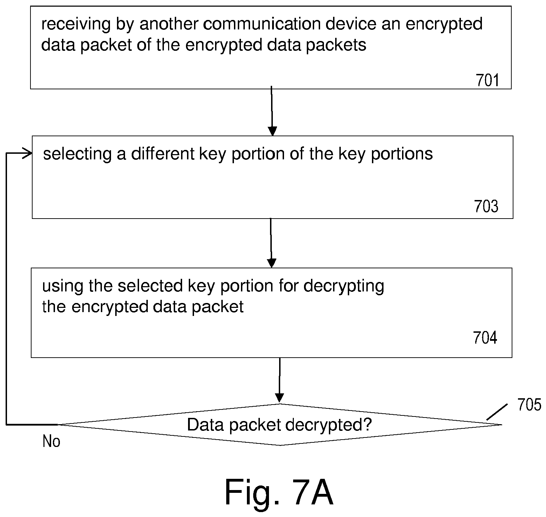

**Figure 7A** is a flowchart of a method for accessing the transmitted data items by a receiver in accordance with an example of the present subject matter.

The receiver may receive in step 701 an encrypted data packet of the encrypted data packets that have been transmitted e.g. as described with reference to Figure 6A-B.

In step 703, the receiver may select a different key portion of the key portions *sekey1 to skeyM,* and use in step 704 the selected key portion for decrypting the received encrypted data packet. This selection may be a random selection. This may enable a

If (inquiry step 705) the encrypted data packet is not decrypted steps 701 to 705 may be repeated until the data packet is decrypted.

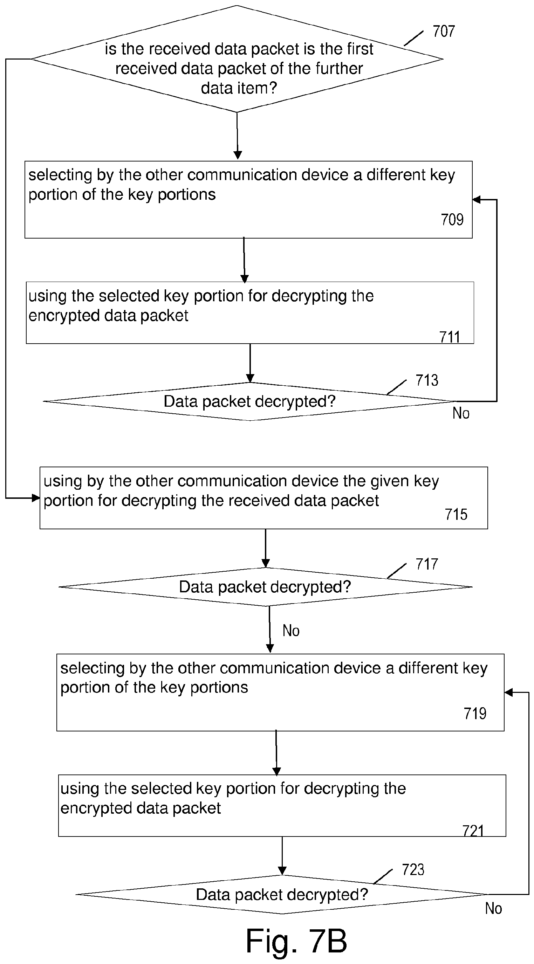

**Figure 7B** is a flowchart of a method for accessing the transmitted data items by a receiver in accordance with an example of the present subject matter. For example, the receiver may receive encrypted data packets of a given data item as transmitted by the communication device e.g. as described with reference to Figure 6A-B.

Upon receiving an encrypted data packet, the receiver may determine in inquiry step 707, if the received encrypted data packet is the first received data packet of the given data item. This may for example be performed by reading and using the header information of the received encrypted data packet e.g. by using the index 211A-N of the received data packet and determining whether another data packet with the same index has already been received at the receiver.

If (inquiry step 707) the received encrypted data packet is the first received data packet of the given data item, the receiver may select in step 709 a key portion of the key portions *sekey1 to skeyM.* In step 711, the receiver may use the selected key portion for decrypting the encrypted data packet. If (inquiry step 713) the encrypted data packet is not decrypted steps 709 to 713 may be repeated until the data packet is decrypted.

If (inquiry step 707) the received encrypted data packet is not the first received data packet of the given data item, the receiver may first try or use in step 715 the previously used key portion that has been used for decryption in step 711 of the first received encrypted data packet. This may be advantageous in case the data packets of the same data item are encrypted with the same key portion.

If (inquiry step 717) the encrypted data packet is not decrypted by the previously used key portion, the receiver may select in step 719 a different key portion of the key portions *sekey1 to skeyM* that is different from the previously used key portion. In step 721, the receiver may use the selected key portion for decrypting the encrypted data packet. If (inquiry step 723) the encrypted data packet is not decrypted steps 709 to 713 may be repeated until the data packet is decrypted.

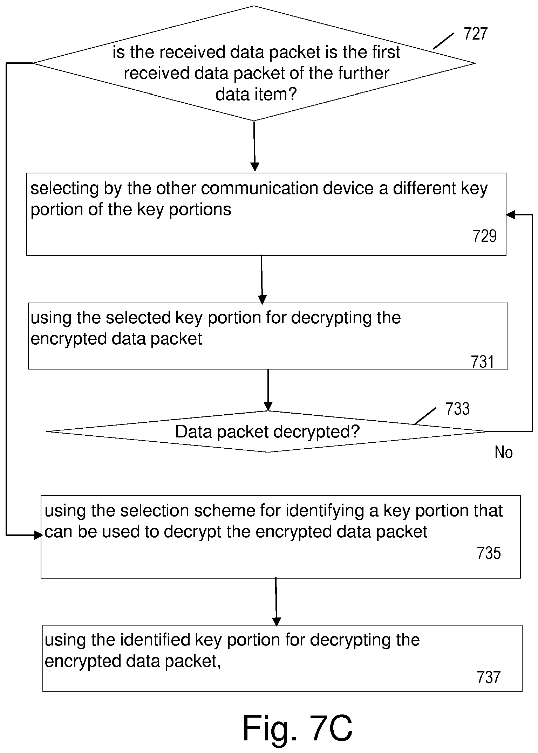

**Figure 7C** is a flowchart of a method for accessing the transmitted data items by a receiver in accordance with an example of the present subject matter. For example, the receiver may receive encrypted data packets of a given data item as transmitted by the communication device e.g. as described with reference to Figure 6A-B.

Upon receiving an encrypted data packet, the receiver may determine in inquiry step 727, if the received encrypted data packet is the first received data packet of the given data item. This may for example be performed by reading and using the header information of the received encrypted data packet e.g. by using the index 211A-N of the received data packet and determining whether another data packet with the same index has already been received.

If (inquiry step 727) the received encrypted data packet is the first received data packet of the given data item, the receiver may select in step 729 a key portion of the key portions *sekey1 to skeyM.* In step 731, the receiver may use the selected key portion for decrypting the encrypted data packet. If (inquiry step 733) the encrypted data packet is not decrypted steps 739 to 733 may be repeated until the data packet is decrypted.

If (inquiry step 727) the received encrypted data packet is not the first received data packet of the given data item, the receiver may use the selection scheme for identifying in step 735 a key portion of the key portions *sekey1 to skeyM* that can be used to decrypt the encrypted data packet. In step 737, the receiver may use the identified key portion for decrypting the encrypted data packet.

The methods of Figures 7A-C may be performed or repeated for each data packet that is received at the receiver. The receiver may further combine or assemble the received data packets using the order numbers 210A-N and indexes 211A-N to build the data items that have been transmitted.

## Claims

1. A communication method for transmitting at least one data item (207) comprising: packetizing (201), by a communication device (100), the data item (207) into a sequence of data packets (209A-N); and broadcasting (203) by the communication device (100) the data packets (209A-N) over a connectionless channel in a short-range radio frequency band repeatedly: determining (301) an urgency level of transmission of the at least one data item that are currently stored at the communication device; assigning (305) to each data packet of the data packets a timestamp being indicative of a delay for broadcasting the respective data packet; executing (307) a priority scheduling using the determined urgency level and the current time delays, thereby calculating priorities of the data packets, the broadcasting of at least part of the data packets being performed in accordance with the priorities,
determining advertisers (113A-N) of a hardware abstraction layer (111) of the communication device (100), wherein each advertiser of the advertisers is configured to transmit a data packet in accordance with an assigned advertisement time frame; for each data item of the at least one data item, selecting (401) an advertiser of the advertisers using the urgency level of the data item and the advertisement time frames; for each advertiser of the selected advertisers, separately performing (403) the execution of the priority scheme using the urgency level and the current time delays of data packets for which said advertiser is selected; wherein said advertiser is configured to perform the broadcasting of said data packets.

2. The method of claim 1, wherein the transmission is performed by at least one advertiser (113A-N) of a hardware abstraction layer (111) of the communication device (100), wherein the advertiser is configured to transmit a scheduled data packet in accordance with an advertisement time frame, wherein the repetition is performed with a repetition frequency proportional to the advertisement time frame.

3. The method of any of the preceding claims, further comprising receiving the data items from a real time data source and/or from a static data source, wherein the urgency level of a data item received from the real time data source is higher than the urgency level of a data item received from the static data source.

4. The method of claim 3, the real time data source comprising one of a: location determining system, real time flight data source, and news data source; the static data source providing a user identity.

5. The method of any of the preceding claims, wherein each data packet of the data packets comprises a sequence number indicative of a transmission order of the data packet within the sequence and an index indicative of the data item, the method further comprising repeating the broadcasting of the sequence of data packets at least once.

6. The method of any of the preceding claims, the broadcasting comprising:
for each data packet of the data item, randomly hopping from a previously used frequency to another frequency of the short-range radio frequency band for the broadcasting of the data packet; or
for each iteration of the broadcasting of the sequence of data packets, randomly hopping from a previously used frequency to another frequency of the short-range radio frequency band for the iterated broadcasting of the data packets.

7. A library comprising a pre-written routine which, when executed by a computer device, causes the computer device to enable the execution of the method of any of the preceding claims.

8. A communication device, operating in a short-range radio frequency band, the device being configured for packetizing a data item into a sequence of data packets; and broadcasting the data packets over a connectionless channel in a short-range radio frequency band, repeatedly: determining (301) an urgency level of transmission of the at least one data item that are currently stored at the communication device; assigning (305) to each data packet of the data packets a timestamp being indicative of a delay for broadcasting the respective data packet; executing (307) a priority scheduling using the determined urgency level and the current time delays, thereby calculating priorities of the data packets, the broadcasting of at least part of the data packets being performed in accordance with the priorities,
determining advertisers (113A-N) of a hardware abstraction layer (111) of the communication device (100), wherein each advertiser of the advertisers is configured to transmit a data packet in accordance with an assigned advertisement time frame; for each data item of the at least one data item, selecting (401) an advertiser of the advertisers using the urgency level of the data item and the advertisement time frames; for each advertiser of the selected advertisers, separately performing (403) the execution of the priority scheme using the urgency level and the current time delays of data packets for which said advertiser is selected; wherein said advertiser is configured to perform the broadcasting of said data packets.

## Patentansprüche

1. Kommunikationsverfahren zum Versenden eines oder mehrerer Datenposten (207), umfassend: Paketieren (201) des Datenpostens (207), durch eine Kommunikationsvorrichtung (100), zu einer Reihe von Datenpaketen (209A-N); und Übertragen (203) der Datenpakete (209A-N) als Broadcast, durch die Kommunikationsvorrichtung (100), über einen kabellosen Kanal in einem Nahbereichs-Funkfrequenzband; wiederholt:
Bestimmen (301) eines Dringlichkeitsgrads für das Versenden des einen oder der mehreren Datenposten, die aktuell in der Kommunikationsvorrichtung gespeichert sind; für jedes Datenpaket von den Datenpaketen: Zuweisen (305) eines Zeitstempels, der eine Verzögerung für die Übertragung des jeweiligen Datenpakets als Broadcast angibt; Ausführen (307) einer Prioritätsplanung unter Verwendung des jeweiligen Dringlichkeitsgrads und der aktuellen Verzögerungen, um Prioritäten der Datenpakete zu berechnen, wobei eine Übertragung von zumindest einem Teil der Datenpakete als Broadcast gemäß den Prioritäten durchgeführt wird,
Bestimmen von Advertisern (113A-N) einer Hardware-Abstraktionsschicht (111) der Kommunikationsvorrichtung (100), wobei jeder Advertiser von den Advertisern dafür ausgelegt ist, ein Datenpaket gemäß einem zugewiesenen Advertisement-Zeitrahmen zu senden; Auswählen (401) eines Advertisers von den Advertisern für den einen oder für jeden von den Datenposten unter Verwendung des Dringlichkeitsgrads der Datenposten und der Advertisement-Zeitrahmen; separat, für jeden Advertiser von den ausgewählten Advertisern: Durchführen (403) der Ausführung der Prioritätsplanung, unter Verwendung des Dringlichkeitsgrads und der aktuellen Verzögerungen der Datenpakete, für die der Advertiser ausgewählt worden ist;
wobei der Advertiser dafür ausgelegt ist, das Übertragen der Datenpakete als Broadcast durchzuführen.

2. Verfahren nach Anspruch 1, wobei das Versenden von mindestens einem Advertiser (113A-N) einer Hardware-Abstraktionsschicht (111) der Kommunikationsvorrichtung (100) durchgeführt wird, wobei der Advertiser dafür ausgelegt ist, ein eingeplantes Datenpaket gemäß einem Advertisement-Zeitrahmen zu versenden, wobei die Wiederholung mit einer Wiederholungsfrequenz durchgeführt wird, die proportional ist zu dem Advertisement-Zeitrahmen.

3. Verfahren nach einem der vorangehenden Ansprüche, ferner das Empfangen der Datenposten von einer Echtzeitdatenquelle und/oder von einer Statikdatenquelle umfassend, wobei der Dringlichkeitsgrad eines Datenpostens, der von der Echtzeitdatenquelle empfangen wird, höher ist als der Dringlichkeitsgrad eines Datenpostens, der von der Statikdatenquelle empfangen wird.

4. Verfahren nach Anspruch 3, wobei die Echtzeitdatenquelle eines umfasst von: einem Ortsbestimmungssystem, einer Echtzeit-Flugdatenquelle und einer Nachrichtendatenquelle; wobei die Statikdatenquelle eine Nutzerkennung bereitstellt.

5. Verfahren nach einem der vorangehenden Ansprüche, wobei jedes Datenpaket von den Datenpaketen eine laufende Nummer, die eine Sendereihenfolge des Datenpakets innerhalb der Reihe angibt, und einen Index, der den Datenposten angibt, umfasst, wobei das Verfahren ferner ein mindestens einmaliges Wiederholen des Übertragens der Reihe von Datenpaketen als Broadcast umfasst.

6. Verfahren nach einem der vorangehenden Ansprüche, wobei das Übertragen als Broadcast umfasst:
für jedes Datenpaket des Datenpostens: Springen von einer bereits verwendeten Frequenz zu einer anderen Frequenz des Kurzbereichs-Funkfrequenzbands, nach dem Zufallsprinzip, um das Datenpaket als Broadcast zu übertragen; oder
für jede Iteration der Übertragung der Reihe von Datenpaketen als Broadcast: Springen von einer bereits verwendeten Frequenz zu einer anderen Frequenz des Kurzbereichs-Funkfrequenzbands, nach dem Zufallsprinzip, um die Datenpakete iterativ als Broadcast zu übertragen.

7. Bibliothek, eine vorab geschriebene Routine umfassend, die bei ihrer Ausführung durch eine Computervorrichtung die Computervorrichtung veranlasst, die Ausführung des Verfahrens nach einem der vorangehenden Ansprüche zu ermöglichen.

8. Kommunikationsvorrichtung, die in einem Kurzbereichs-Funkfrequenzband betrieben wird,
wobei die Vorrichtung dafür ausgelegt ist, einen Datenposten in eine Reihe von Datenpaketen zu paketieren; und die Datenpakete über einen kabellosen Kanal in einem Kurzbereichs-Funkfrequenzband als Broadcast zu übertragen, wiederholtes: Bestimmen (301) eines Dringlichkeitsgrads für das Versenden des mindestens einen Datenpostens, der aktuell in der Kommunikationsvorrichtung gespeichert ist; für jedes Datenpaket von den Datenpaketen: Zuweisen (305) eines Zeitstempels, der eine Verzögerung für eine Übertragung des jeweiligen Datenpakets als Broadcast angibt; Ausführen (307) einer Prioritätsplanung unter Verwendung des jeweiligen Dringlichkeitsgrads und der aktuellen Verzögerungen, um Prioritäten der Datenpakete zu berechnen, wobei das Übertragen von zumindest einem Teil der Datenpakete als Broadcast gemäß den Prioritäten durchgeführt wird,
Bestimmen von Advertisern (113A-N) einer Hardware-Abstraktionsschicht (111) der Kommunikationsvorrichtung (100), wobei jeder Advertiser von den Advertisern dafür ausgelegt ist, ein Datenpaket gemäß einem zugewiesenen Advertisement-Zeitrahmen zu senden; Auswählen (401) eines Advertisers von den Advertisern für den einen Datenposten oder jeden von den Datenposten unter Verwendung des Dringlichkeitsgrads der Datenposten und der Advertisement-Zeitrahmen; separat, für jeden Advertiser von den ausgewählten Advertisern: Durchführen (403) der Ausführung der Prioritätsplanung unter Verwendung des Dringlichkeitsgrads und der aktuellen Verzögerungen der Datenpakete, für die der Advertiser ausgewählt worden ist; wobei der Advertiser dafür ausgelegt ist, das Übertragen der Datenpakete als Broadcast durchzuführen.

## Revendications

1. Procédé de communication permettant de transmettre au moins un élément de donnée (207) comprenant : la mise en paquets (201), par un dispositif de communication (100), de l'élément de donnée (207) en une séquence de paquets de données (209A à N) ; et la diffusion (203), par le dispositif de communication (100), des paquets de données (209A à N) sur un canal sans connexion dans une bande de fréquence radio à courte portée
répétitivement : la détermination (301) d'un niveau d'urgence de transmission de l'au moins un élément de donnée qui est stocké actuellement au niveau du dispositif de communication ;
l'attribution (305) à chaque paquet de données parmi les paquets de données d'une estampille temporelle indicatrice d'un délai de diffusion du paquet de données respectif ; l'exécution (307) d'une planification prioritaire en utilisant le niveau d'urgence déterminé et les délais temporels actuels, en calculant pour ce faire des priorités pour les paquets de données, la diffusion d'au moins une partie des paquets de données étant effectuée en fonction des priorités,
la détermination d'annonceurs (113A à N) d'une couche d'abstraction matérielle (111) du dispositif de communication (100), où chaque annonceur parmi les annonceurs est conçu pour transmettre un paquet de données en relation avec un cadre temporel d'annonce attribué ; pour chaque élément de donnée parmi l'au moins un élément de donnée, la sélection (401) d'un annonceur parmi les annonceurs en utilisant le niveau d'urgence de l'élément de donnée et les cadres temporels d'annonce ; pour chaque annonceur parmi les annonceurs sélectionnés, la réalisation séparée (403) de l'exécution du schéma de priorité en utilisant le niveau d'urgence et les délais temporels actuels de paquets de données pour lesquels ledit annonceur est sélectionné ; où ledit annonceur est conçu pour effectuer la diffusion desdits paquets de données.

2. Procédé selon la revendication 1, dans lequel la transmission est effectuée par au moins un annonceur (113A à N) d'une couche d'abstraction matérielle (111) du dispositif de communication (100), où l'annonceur est conçu pour transmettre un paquet de données planifié en relation avec un cadre temporel d'annonce, où la répétition est effectuée avec une fréquence de répétition proportionnelle au cadre temporel d'annonce.

3. Procédé selon l'une quelconque des revendications précédentes, comprenant en outre la réception des éléments de données à partir d'une source de données en temps réel et/ou d'une source de données statique, où le niveau d'urgence d'un élément de donnée reçu à partir de la source de donnée en temps réel est supérieur au niveau d'urgence d'un élément de donnée reçu à partir de la source de données statique.

4. Procédé selon la revendication 3, la source de données en temps réel comprenant un élément parmi : un système de détermination de localisation, une source de données de vol en temps réel, et une source de données d'informations ; la source de données statique fournissant une identité d'utilisateur.

5. Procédé selon l'une quelconque des revendications précédentes, dans lequel chaque paquet de données parmi les paquets de données comprend un numéro de séquence indicateur d'un ordre de transmission du paquet de données dans la séquence et un indice indicateur de l'élément de donnée, le procédé comprenant en outre la répétition de la diffusion de la séquence des paquets de données au moins une fois.

6. Procédé selon l'une quelconque des revendications précédentes, la diffusion comprenant :
pour chaque paquet de données de l'élément de donnée, le saut aléatoire d'une fréquence utilisée précédemment à une autre fréquence d'une bande de fréquences radio de courte portée pour la diffusion du paquet de données ; ou
pour chaque itération de la diffusion de la séquence de paquets de données, le saut aléatoire d'une fréquence utilisée précédemment à une autre fréquence d'une bande de fréquences radio de courte portée pour la diffusion itérative des paquets de données.

7. Bibliothèque comprenant une routine pré-écrite qui, lorsqu'elle est exécutée par un dispositif informatique, fait que le dispositif informatique effectue l'exécution du procédé selon l'une quelconque des revendications précédentes.

8. Dispositif de communication fonctionnant dans une bande de fréquences radio de courte portée, le dispositif étant conçu pour mettre en paquets un élément de donnée en une séquence de paquets de données ; et diffuser (203) les paquets de données sur un canal sans connexion dans une bande de fréquence radio de courte portée, répétitivement : déterminer (301) un niveau d'urgence de transmission de l'au moins un élément de donnée qui est stocké actuellement au niveau du dispositif de communication ; attribuer (305) à chaque paquet de données parmi les paquets de données une estampille temporelle indicatrice d'un délai de diffusion du paquet de données respectif ; exécuter (307) une planification prioritaire en utilisant le niveau d'urgence déterminé et les délais temporels actuels, en calculant pour ce faire des priorités pour les paquets de données, la diffusion d'au moins une partie des paquets de données étant effectuée en fonction des priorités, déterminer des annonceurs (113A à N) d'une couche d'abstraction matérielle (111) du dispositif de communication (100), où chaque annonceur parmi les annonceurs est conçu pour transmettre un paquet de données en relation avec un cadre temporel d'annonce attribué ; pour chaque élément de donnée parmi l'au moins un élément de donnée, sélectionner (401) un annonceur parmi les annonceurs en utilisant le niveau d'urgence de l'élément de donnée et les cadres temporels d'annonce ; pour chaque annonceur parmi les annonceurs sélectionnés, réaliser de manière séparée (403) l'exécution du schéma de priorité en utilisant le niveau d'urgence et les délais temporels actuels de paquets de données pour lesquels ledit annonceur est sélectionné ; où ledit annonceur est conçu pour effectuer la diffusion desdits paquets de données.
